# FASCICULE DE BREVET EUROPEEN

(11) **EP 3 068 664 B1**
(45) Date de publication et mention de la délivrance du brevet: **29.08.2018**
(21) Numéro de dépôt: 14796223.7
(22) Date de dépôt: 09.10.2014
(51) Int. Cl.: B60R 21/2155, B60R 21/205, B60R 21/215

(54) **DISPOSITIF D'OUVERTURE D'UN SAC GONFLABLE DANS UN VÉHICULE AUTOMOBILE**
ERÖFFNUNGSVORRICHTUNG EINES AIRBAGS IN EINEM KRAFTFAHRZEUG
AIRBAG OPENING ASSEMBLY IN A CAR VEHICLE

(30) Priorité: 14.11.2013 FR 1361105
(43) Date de publication de la demande: 21.09.2016
(73) Titulaire: Renault s.a.s, 92100 Boulogne-Billancourt (FR)
(72) Inventeur: CORRE, Jean-Marie, F-78770 Thoiry (FR)
(86) Numéro de dépôt international: PCT/FR2014/052558
(87) Numéro de publication internationale: WO 2015/071561

(56) Documents cités:
- JP-A- 2000 198 405
- JP-A- 2003 200 804
- US-A1- 2002 125 689
- US-B1- 6 336 652

## Description

L'invention se rapporte à un dispositif d'ouverture d'un sac gonflable dans un véhicule automobile.

Pour la compréhension du texte, un sac gonflable est couramment appelé airbag. Au repos, le sac est replié dans un endroit précis de l'habitacle d'un véhicule, comme par exemple un siège ou une planche de bord, et il se , déploie lors d'un choc dudit véhicule contre un obstacle extérieur, afin d'éviter qu'un occupant ne vienne percuter un élément rigide dudit habitacle. L'invention a pour objet un dispositif d'ouverture d'un sac gonflable, sécurisé.

En effet, il peut arriver que lors de son déploiement, le sac génère des effets secondaires inattendus et potentiellement dangereux, risquant de blesser la personne qu'il est censé protéger. Ces effets secondaires sont généralement produits en raison des conditions de montage du sac gonflable dans le véhicule et de la configuration géométrique de l'environnement immédiat dudit sac dans le véhicule. Ils peuvent, par exemple, consister en l'émission de fragments parasites. De plus, il peut arriver que l'élément de structure dans lequel est implanté le sac, présente une surface extérieure galbée s'étendant selon une direction transversale du véhicule, et qui rend particulièrement difficile la conception et l'intégration d'un volet mobile destiné à recouvrir ledit sac. C'est le cas par exemple, lorsque l'élément de structure est une planche de bord, ledit volet devant alors s'ouvrir correctement afin de permettre le déploiement du sac gonflable à l'extérieur de la planche de bord en cas de choc.

Le document US 6 336 652 B1 décrit un dispositif d'ouverture d'un sac gonflable comprenant des zones de pliage non spécialement adaptées à une forme galbée d'une planche de bord.

Les dispositifs d'ouverture d'un sac gonflable selon l'invention, sont destinés à permettre une ouverture satisfaisante dudit sac, malgré la forme galbée de l'élément de structure du véhicule sur lequel il est implanté. Une ouverture satisfaisante signifie une ouverture complète, sans l'émission d'effets secondaires susceptibles de blesser un occupant du véhicule.

L'invention a pour objet un dispositif d'ouverture d'un sac gonflable dans un élément de structure d'un véhicule, selon la revendication 1. Le sac est replié dans ledit élément en étant recouvert par un volet mobile.

En effet, dans le cas d'un volet indéformable et monobloc, lorsque le sac se déploie, ledit volet va s'ouvrir brutalement et peut venir impacter une pièce rigide placée dans l'environnement immédiat de l'élément de structure sur lequel il est monté. Il risque alors de se rompre en plusieurs morceaux, qui vont être projetés de façon aléatoire dans l'habitacle du véhicule et devenir une source potentielle de blessure, Dans la même situation, un volet possédant au moins une zone de pliage, va se déformer sans se rompre, et donc sans émettre de fragments potentiellement dangereux. Il est important de dimensionner les zones de pliage par rapport aux sollicitations engendrées par le déploiement du sac, de façon à ce qu'elles ne cèdent pas pour provoquer le morcellement du volet. Une zone de pliage est une notion générale désignant tout type de moyen susceptible de favoriser la pliage du violet. Elle peut, par exemple, revêtir la forme d'une charnière conventionnelle ou d'une zone prédécoupée du volet, de moindre épaisseur. Ainsi, lorsque le volet est composé d'une pluralité de parties, deux parties consécutives sont séparées l'une de l'autre par une zone de pliage. L'élément de structure de l'habitacle dans lequel est implanté le sac, peut par exemple, correspondre à un siège ou à une planche de bord.

Avantageusement, le volet s'ouvre par rotation sur l'élément de structure et demeure relié audit élément après le déploiement du sac. En effet, même si le volet ne se morcelle pas en raison de la présence de zones de pliage, il ne faut pas qu'il constitue en lui-même un projectile dangereux susceptible de venir impacter un occupant. L'organe de liaison solidarisant le volet à l'élément de structure doit donc être dimensionné pour retenir le volet après que le sac ait été déployé. Selon l'invention, le volet pivote sur l'élément de structure au moyen d'un filet charnière. Il s'agit d'un moyen de rotation éprouvé et adapté à ce type d'ouverture de volet, car il demeure léger et résistant.

Selon un premier mode de réalisation préféré d'un dispositif d'ouverture selon l'invention, le volet est monobloc et dispose d'au moins une zone de pliage. Un volet monobloc est souvent recherché en raison principalement de la facilité et de la rapidité de son procédé de fabrication.

Préférentiellement, chaque zone de pliage correspond à une ligne de pliage. Plus la zone de pliage est réduite, plus elle rendra le pliage précis. Même si le volet ne se fragmente pas, un pliage imprécis et aléatoire de celui-ci pourrait également occasionner des blessures potentielles. Il est donc fondamental de bien maitriser les conditions de pliage du volet au moment du déploiement du sac.

De façon avantageuse, une ligne de pliage est constituée par une zone rectiligne du volet de moindre épaisseur. Ainsi lorsque le volet est soumis à un effort, il aura tendance à se déformer au niveau de ses zones présentant une faible résistance mécanique, en l'occurrence les zones de moindre épaisseur. En fonction des besoins de pliage du volet, ledit volet peut être quadrillé par une pluralité de lignes de moindre épaisseur. Il est supposé que le volet est monobloc et que le matériau situé au niveau d'une ligne de moindre épaisseur est identique au matériau constituant le reste du volet de plus grande épaisseur.

Selon un autre mode de réalisation préféré d'un dispositif d'ouverture selon l'invention, une ligne de pliage est constituée par une alternance de segments pleins et d'ouvertures alignés.

Selon un autre mode de réalisation préféré d'un dispositif d'ouverture selon l'invention, le volet comprend au moins une charnière pour assurer son pliage. Il s'agit d'une charnière conventionnelle apte à assurer une rotation entre deux parties de volet, et donc un pliage entre lesdites parties.

Un dispositif d'ouverture selon l'invention est particulièrement adapté à l'implantation d'un sac gonflable dans une planche de bord d'un véhicule, entre deux galbes surélevés de ladite planche. Lorsque le volet pivote lors du déploiement du sac, il est amené à venir percuter les deux galbes de la planche de bord. En possédant deux zones de pliage correctement orientées, ledit volet peut alors se plier au contact des deux galbes pour s'adapter à la forme desdits galbes, sans se rompre et générer des fragments potentiellement dangereux. De plus, en se pliant, le volet va augmenter le volume alloué au déploiement du sac, car il va épouser au mieux la forme des galbes de la planche de bord.

L'invention a pour deuxième objet un véhicule comprenant au moins un sac gonflable monté au moyen d'un dispositif conforme à l'invention.

Un dispositif d'ouverture selon l'invention présente l'avantage d'être simple à mettre en oeuvre, en raison de la facilité et de la rapidité de fabrication du volet. Il a de plus l'avantage d'améliorer la sécurité de déploiement du sac, sans l'ajout de pièces supplémentaires spécialement conçues pour cette fonction sécuritaire, et sans augmenter l'encombrement de la zone de stockage dudit sac. Il présente enfin l'avantage d'impliquer un volet amélioré, qui est d'un coût sensiblement égal à celui d'un volet existant.

On donne, ci-après, une description détaillée d'un mode de réalisation préféré d'un dispositif d'ouverture d'un sac gonflable selon l'invention, en se référant aux figures 1 à 3.
- La figure 1 est une vue schématique en perspective de l'emplacement d'un sac gonflable doté d'un dispositif d'ouverture selon l'invention, ledit sac (non visible) étant déployé,
- La figure 2 est une vue du dessus d'un volet mobile recouvrant un sac gonflable dans la planche de bord d'un véhicule, ledit volet étant dans une position fermée,
- La figure 3 est une vue schématique en coupe transversale d'un volet mobile recouvrant un sac gonflable dans la planche de bord d'un véhicule, ledit volet étant dans une position ouverte après que le sac se soit déployé.

La description est réalisée à partir d'un référentiel lié au véhicule et dans lequel l'axe X est un axe longitudinal du véhicule, l'axe Y est un axe transversal dudit véhicule et l'axe Z est un axe vertical.

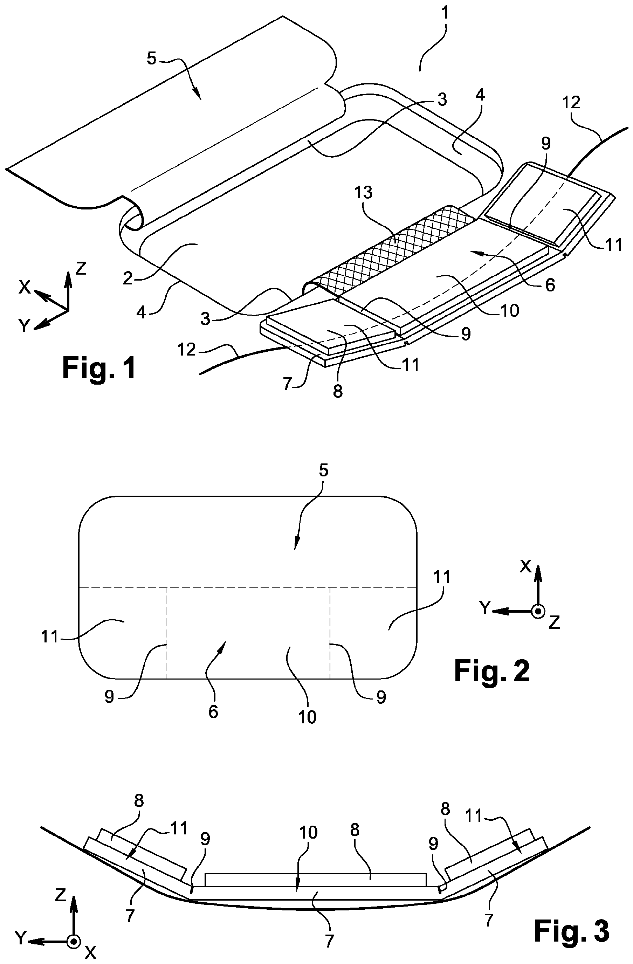

En se référant à la figure 1, un dispositif d'ouverture selon l'invention, permet de déployer un sac gonflable implanté dans une planche de bord 1 d'un véhicule automobile, du coté passager. Ce sac gonflable est conventionnellement associé à un dispositif de déclenchement apte à gonfler ledit sac en cas de choc du véhicule contre un obstacle externe. En situation normale, le sac est replié dans un évidement creux 2 de la planche de bord 1, qui a globalement la forme d'un rectangle dont les grands cotés 3 s'étendent selon une direction transversale Y du véhicule et dont les petits cotés 4 sont orientés selon un axe longitudinal X dudit véhicule.

En se référant aux figures 1 et 2, le sac replié dans l'évidement 2 est protégé par deux volets mobiles 5,6 recouvrant ledit sac sur la planche de bord 1. Un premier volet 5 est monobloc et de forme rectangulaire, dont les grands cotés ont sensiblement la même longueur que celle des grands cotés 3 de l'évidement 2, et dont les petits cotés ont une longueur correspondant à la moitié de la longueur des petits cotés 4 dudit évidement 2. Ce premier volet 5 est monté en étant articulé autour du grand coté 3 le plus avancé de l'évidement creux 2. Lorsque le sac est replié dans l'évidement 2, ce premier volet 5 recouvre sensiblement la moitié avant de la surface dudit évidement 2.

En se référant à la figure 1, lorsque le sac se déploie subitement lors d'un choc du véhicule, le premier volet 5 pivote vers l'avant, en direction du pare-brise dudit véhicule, en effectuant une rotation d'environ 180° autour d'un axe transversal Y du véhicule matérialisé par le grand coté 3 avant de l'évidement 2. Ledit volet 5 se retrouve alors dans une position horizontale, juste devant l'évidement 2.

En se référant à la figure 2, un deuxième volet 6 ayant la même forme générale et les mêmes dimensions que celles du premier volet 5, est monté en étant articulé autour du grand coté 3 arrière de l'évidement creux 2. Ce deuxième volet 6 est relié audit grand coté 3 arrière, au moyen d'un filet charnière 13, qui peut par exemple être constitué d'un treillis en polyamide indémontable.

Les notions d'avant et d'arrière appliquées aux grands cotés 3 de l'évidement creux 2 sont à considérer par rapport à un axe longitudinal X du véhicule. Lorsque le sac est replié dans l'évidement creux 2, ce deuxième volet 6 recouvre sensiblement la moitié arrière de la surface dudit évidement 2.

Ainsi, lorsque le sac est replié dans l'évidement 2, les deux volets 5,6 recouvrent intégralement la surface totale dudit évidement 2. Ce deuxième volet 6 est constitué par une couche externe 7 pouvant, par exemple, être en polypropylène ou en matière plastique, et par une couche interne 8 plus flexible que ladite couche externe 7, pour accepter des déformations importantes et très rapides dues au déploiement du sac. Cette couche interne 8 peut par exemple être en matière plastique. Avantageusement, les épaisseurs de la couche interne 8 et de la couche externe 7 sont comprises entre 2.5mm et 3mm.

En se référant aux figures 1 et 3, le deuxième volet 6 présente deux lignes 9 de prédécoupe, orientées le long d'un axe longitudinal X du véhicule et traversant complètement ledit volet 6. Ces deux lignes 9 permettent de diviser le deuxième volet 6 en une partie centrale 10 rectangulaire et en deux parties latérales 11 rectangulaires et identiques. Chaque ligne 9 de prédécoupe correspond à une épaisseur réduite de volet 6 et est réalisée au moyen d'un laser. Ainsi, l'épaisseur restante du volet 6 au niveau de ces lignes 9, correspond à une épaisseur réduite de la couche externe 7, la couche interne ayant disparu au niveau desdites lignes 9 de prédécoupe.

En se référant à la figure 1, la planche de bord 1 comprend deux saillies galbées 12, positionnées de part et d'autre de l'évidement creux 2, le long d'un axe transversal Y du véhicule, et légèrement décalées vers l'arrière dudit évidement 2 le long d'un axe longitudinal X du véhicule.

Ainsi, lorsque survient un choc entre le véhicule et un obstacle extérieur, les évènements suivants se produisent. Le sac gonflable se gonfle de façon quasi-instantanée. Ledit sac provoque alors l'ouverture par rotation du premier 5 et du deuxième volet 6, qui recouvraient initialement le sac replié dans l'évidement creux 2 de la planche de bord 1. Le premier volet 5 pivote d'environ 180° vers l'avant en direction du pare-brise comme le montre la figure 1. Simultanément, le deuxième volet 6 subit une rotation vers l'arrière d'environ 180° autour du filet charnière 13, en direction du passager. Les deux parties latérales 11 de ce deuxième volet 6 viennent percuter les deux saillies galbées 12 de la planche de bord 1, provoquant la pliage desdites parties latérales 11 autour des lignes de prédécoupe 9. En se référant à la figure 3, les deux parties latérales 11 se retrouvent ainsi désalignées de la partie centrale 10 du volet 6. Le pliage desdites parties latérales 11 permet ainsi auxdites parties 11 d'accompagner le choc contre les deux saillies galbées 12 de la planche de bord 1, sans se détacher du volet 6. Ces parties latérales 11 ne peuvent donc pas constituer des projectiles dangereux, susceptibles de blesser un occupant du véhicule. Le filet charnière 13 est dimensionné pour retenir le deuxième volet 6 contre la planche de bord 1 et ainsi éviter qu'il ne se détache de celle-ci.

## Revendications

1. Dispositif d'ouverture d'un sac gonflable comprenant un sac gonflable et un élément de structure (1) d'un véhicule, ledit sac étant replié dans un évidement (2) dudit élément de structure (1) en étant recouvert par un volet mobile (6), ledit volet (6) étant relié à un côté (3) de l'évidement (2) au moyen d'un filet charnière (13), **caractérisé en ce que** l'élément de structure (1) est une planche de bord s'étendant transversalement dans le véhicule et possédant deux galbes surélevés (12), et **en ce que** le volet: (6) s'étend transversalement sur ladite planche de bord (1) et possède deux zones de pliages (9) orientées selon un axe longitudinal du véhicule, le volet (6) étant placé sur ladite planche de bord (1) de manière à pouvoir s'ouvrir avec une rotation d'environ 180° autour du filet charnière (13) sous l'influence du déploiement du sac gonflable lors d'un choc du véhicule contre un obstacle extérieur, puis à se plier au contact desdits galbes surélevés (12) de la planche de bord sans se rompre.

2. Dispositif selon la revendication 1, **caractérisé en ce que** le volet (6) s'ouvre par rotation sur l'élément de structure (1) et demeure relié audit élément (1) après le déploiement du sac.

3. Dispositif selon la revendication 2, **caractérisé en ce que** le volet (6) pivote sur l'élément de structure (1,2) au moyen d'un filet charnière (13).

4. Dispositif selon l'une quelconque des revendications 1 à 3, **caractérisé en ce que** le volet (6) est monobloc et dispose d'au moins une zone de pliage (9).

5. Dispositif selon la revendication 4, **caractérisé en ce que** chaque zone de pliage correspond à une ligne de pliage (9).

6. Dispositif selon la revendication 5, **caractérisé en ce qu'**une ligne de pliage (9) est constituée par une zone rectiligne du volet (6) de moindre épaisseur.

7. Dispositif selon la revendication 5, **caractérisé en ce qu'**une ligne de pliage (9) est constituée par une alternance de segments pleins et d'ouvertures alignés.

8. Dispositif selon l'une quelconque des revendications 1 à 3, **caractérisé en ce que** le volet (6) comprend au moins une charnière pour assurer son pliage.

9. Véhicule comprenant au moins un sac gonflable monté au moyen d'un dispositif conforme à l'une quelconque des revendications 1 à 8.

## Patentansprüche

1. Vorrichtung zur Öffnung eines Airbags, welche einen Airbag und ein Strukturelement (1) eines Fahrzeugs umfasst, wobei der Airbag in einer Vertiefung (2) des Strukturelements (1) zusammengefaltet ist und dabei von einer beweglichen Klappe (6) bedeckt ist, wobei die Klappe (6) mit einer Seite (3) der Vertiefung (2) mittels eines Gelenknetzes (13) verbunden ist, **dadurch gekennzeichnet, dass** das Strukturelement (1) ein Armaturenbrett ist, dass sich quer in dem Fahrzeug erstreckt und zwei hochliegende Wölbungen (12) besitzt, und dadurch, dass sich die Klappe (6) quer auf dem Armaturenbrett (1) erstreckt und zwei Biegebereiche (9) besitzt, die entlang einer Längsachse des Fahrzeugs ausgerichtet sind, wobei die Klappe (6) derart auf dem Armaturenbrett (1) angeordnet ist, dass sie sich unter dem Einfluss der Entfaltung des Airbags bei einem Zusammenstoß des Fahrzeugs mit einem äußeren Hindernis mit einer Drehung um ungefähr 180° um das Gelenknetz (13) öffnen kann und sich anschließend beim Kontakt mit den hochliegenden Wölbungen (12) des Armaturenbretts verbiegen kann, ohne zu brechen.

2. Vorrichtung nach Anspruch 1, **dadurch gekennzeichnet, dass** sich die Klappe (6) durch Drehung auf dem Strukturelement (1) öffnet und nach der Entfaltung des Airbags mit dem Element (1) verbunden bleibt.

3. Vorrichtung nach Anspruch 2, **dadurch gekennzeichnet, dass** die Klappe (6) auf dem Strukturelement (1, 2) mittels eines Gelenknetzes (13) schwenkt.

4. Vorrichtung nach einem der Ansprüche 1 bis 3, **dadurch gekennzeichnet, dass** die Klappe (6) aus einem Stück besteht und über wenigstens einen Biegebereich (9) verfügt.

5. Vorrichtung nach Anspruch 4, **dadurch gekennzeichnet, dass** jeder Biegebereich einer Biegelinie (9) entspricht.

6. Vorrichtung nach Anspruch 5, **dadurch gekennzeichnet, dass** eine Biegelinie (9) aus einem geradlinigen Bereich der Klappe (6) mit verminderter Dicke besteht.

7. Vorrichtung nach Anspruch 5, **dadurch gekennzeichnet, dass** eine Biegelinie (9) aus einer abwechselnden Anordnung von vollen Segmenten und zueinander fluchtenden Öffnungen besteht.

8. Vorrichtung nach einem der Ansprüche 1 bis 3, **dadurch gekennzeichnet, dass** die Klappe (6) wenigstens ein Scharnier umfasst, um ihre Biegung sicherzustellen.

9. Fahrzeug, welches wenigstens einen Airbag umfasst, der mittels einer Vorrichtung nach einem der Ansprüche 1 bis 8 angebracht ist.

## Claims

1. Airbag opening device comprising an airbag and a structural element (1) of a vehicle, said bag being folded into a recess (2) of said structural element (1) by being covered by a mobile flap (6), said flap (6) being linked onto one side (3) of the recess (2) by means of a hinge thread (13),
**characterized in that** the structural element (1) is a dashboard extending transversely in the vehicle and having two raised curved lines (12), and **in that** the flap (6) extends transversely on said dashboard (1) and has two fold zones (9) oriented along a longitudinal axis of the vehicle, the flap (6) being placed on said dashboard (1) so as to be able to open with a rotation of approximately 180° about the hinge thread (13) under the influence of the deployment of the airbag upon an impact of the vehicle against an external object, then to fold away on contact of said raised curved lines (12) of the dashboard without breaking.

2. Device according to Claim 1, **characterized in that** the flap (6) opens by rotation on the structural element (1) and remains linked to said element (1) after the deployment of the bag.

3. Device according to Claim 2, **characterized in that** the flap (6) pivots on the structural element (1, 2) by means of a hinge thread (13).

4. Device according to any one of Claims 1 to 3,
**characterized in that** the flap (6) is a single piece and has at least one fold zone (9).

5. Device according to Claim 4, **characterized in that** each fold zone corresponds to a fold line (9).

6. Device according to Claim 5, **characterized in that** a fold line (9) is formed by a rectilinear zone of the flap (6) of lesser thickness.

7. Device according to Claim 5, **characterized in that** a fold line (9) consists of an alternation of aligned solid segments and openings.

8. Device according to any one of Claims 1 to 3, **characterized in that** the flap (6) comprises at least one hinge to ensure the folding thereof.

9. Vehicle comprising at least one airbag mounted by means of a device according to any one of Claims 1 to 8.
